# EUROPEAN PATENT SPECIFICATION

(11) **EP 3 632 270 B1**
(45) Date of publication and mention of the grant of the patent: **29.11.2023**
(21) Application number: 19201120.3
(22) Date of filing: 02.10.2019
(51) Int. Cl.: A47G 21/18

(54) **LIGHT AND EDIBLE STRAW**
LEICHTER UND ESSBARER TRINKHALM
PAILLE LÉGÈRE ET COMESTIBLE

(30) Priority: 04.10.2018 TW 107135013
(43) Date of publication of application: 08.04.2020
(73) Proprietor: Zhen Yi Xuan Food Enterprises Co., Taichung City 407 (TW)
(72) Inventor: CHUANG, Yi-Min, Taichung City 407 (TW); CHANG, Chih-Ching, Taichung City 407 (TW)
(74) Representative: Lang, Christian

(56) References cited:
- EP-A1- 3 295 835
- DE-U1-202016 002 650
- US-A1- 2008 181 932

## Description

### BACKGROUND OF INVENTION

### 1. FIELD OF INVENTION

The present invention relates to a straw and, more particularly, to a light and edible straw.

### 2. RELATED PRIOR ART

A straw is often used for drinking from a pack. There are rectilinear straws, telescopic straws and flexible straws. A telescopic straw includes at least two sections of tubes. A flexible straw includes a bellows-shaped section.

Conventional straws are disposed of after they are used. The conventional straws are made of synthetic resin such as poly propylene ("PP") by injection molding, extrusion, blow molding or drawing for example. Such synthetic resin cannot be decomposed. Hence, the straws that are disposed of are a serious environmental and ecological problem.

To solve this environmental and ecological problem, there have been various attempts to make straws of decomposable materials. For example, Japanese patent publication JP 5393566 B2 and Chinese patent application publication CN 102206402 A have been issued to a straw that is made of a decomposable material.

There have been attempts to make straws of edible materials. For example, Taiwanese utility model publication TW M469004 U, an edible straw includes a tube made of starch, a layer of hydrocolloid coated on an internal face of the tube made of starch, and another layer of hydrocolloid coated on an external face of the tube made of starch. The starch is added with additives such as sugar, salt and/or milk powder to modify the flavor of the starch. The tube made of starch is dry and solid. The edible straw is not tasty since the tube made of starch is dry. The edible straw is hard and heavy since the tube made of starch included a sloid wall. It is difficult to chew the edible straw since it is hard. It is inconvenient to carry the edible straw since it is heavy. Patent Application publication US 2008/0181932 A1 discloses an outer layer formed over an inner core, the inner core comprising an inert material, the outer layer formed over in inner core, the inner core comprising an inert material, the outer layer comprising a plurality of of pharmaceutically active agents embedded in a matrix. The matrix is substantially erodible when contacted with an aqueous medium. Utility model publication DE202016002650U1 describes a straw made of cellulose covered by a wax, wherein the straw is made of the stem of a plant, such as rape, reed, sugar cane or horsetail. The present invention is therefore intended to obviate or at least alleviate the problems encountered in the prior art.

### SUMMARY OF THE INVENTION

It is the primary objection of the present invention to provide a light and edible straw and a method of making it. The invention provides a light and edible straw and a method for making it as defined by the appended independent claims 1 and 10. The tube wall includes an internal face, an external face, an upper end face and a lower end face. The microcapsules are inserted in the tube wall. The protective film includes an internal portion covering the internal face of the tube wall, an external portion covering the external face of the tube wall, an upper annular portion covering the upper end face of the tube wall, and a lower annular portion covering the lower end face of the tube wall. Thus, the protective film keeps the tube wall from the liquid. Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings.
FIG. 1 is a flow chart of a process for making a light and edible straw according to the preferred embodiment of the present invention;
FIG. 2 is a cross-sectional view of an empty microcapsule of the light and edible straw shown in FIG. 1;
FIG. 3 is a cross-sectional view of a filled microcapsule of the light and edible straw shown in FIG. 1;
FIG. 4 is a cross-sectional view of a light and edible straw in a shape made in the process shown in FIG. 1; and
FIG. 5 is a cross-sectional view of a light and edible straw in another shape made in the process shown in FIG. 1.

### DETAILED DESCRIPTION OF PREFERRED EMBODIMENT

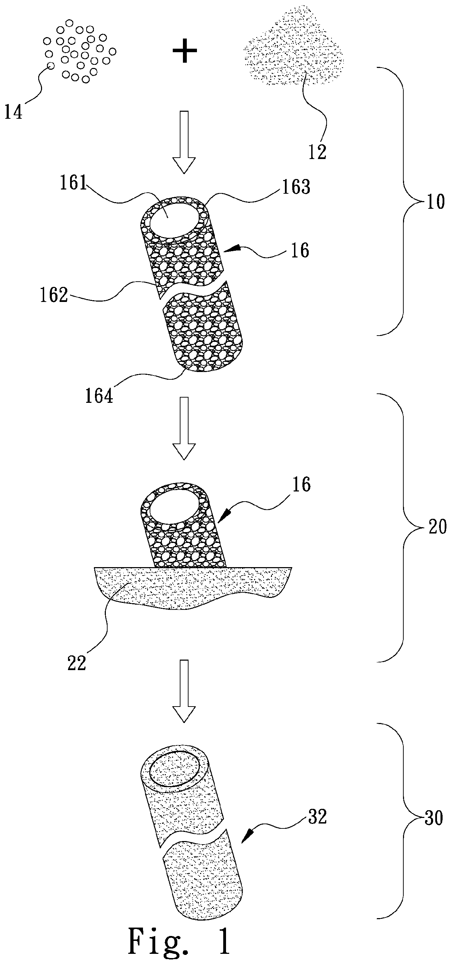

Referring to FIG. 1, a light and edible straw 32 is made in a process including mixing, soaking and finishing according to the preferred embodiment. At 10, the mixing is conducted. At a proper proportion of weight, a starch 12 is mixed with microcapsules 14 and liquid such as clean water. The mixture is shaped into a tube 16. The shaping is done by injection molding for example. The tube 16 is dried by wind or heat for example.

The starch 12 is in the form of powder or grains made by grinding a plant. The plant can be wheat, potato, corn, yam, cassava, lotus root, rice, amorphophallus konjac or modified starch for example.

The diameter of each of the microcapsules 14 is 30 to 1000 µm. The microcapsules 14 are made by spray freezing, electrostatic bonding, porous centrifugation, oil and aqueous phase separation, double emulsion, spray-dried powder, interfacial polymerization, in-situ polymerization, and matrix polymerization for example.

At 20, the soaking is conducted. The tube wall 16 is soaked in wax 22. The wax 22 covers and infiltrates the tube wall 16. The wax 22 is edible. The wax 22 can be a natural product derived from an animal or plant such as beeswax. Alternatively, the wax 22 can be a mixture of natural wax (such as beeswax) with fatty acid.

At 30, the finishing is conducted. The wax 22 coated on the tube 16 is dried and trimmed for example. Thus, a straw 32 is made of the tube 16 and the wax 22. The straw 32 is edible because the tube wall 16 and the wax 22 are both edible.

The density (mass over volume) of the light and edible straw 32 is determined by the proportion of the starch 12 and the microcapsules 14. The density of the light and edible straw 32 is larger if the light and edible straw 32 includes more starch 12. The wall of the light and edible straw 32 is porous if the microcapsules 14 are empty. The wall of the light and edible straw 32 is solid if the microcapsules 14 are filled.

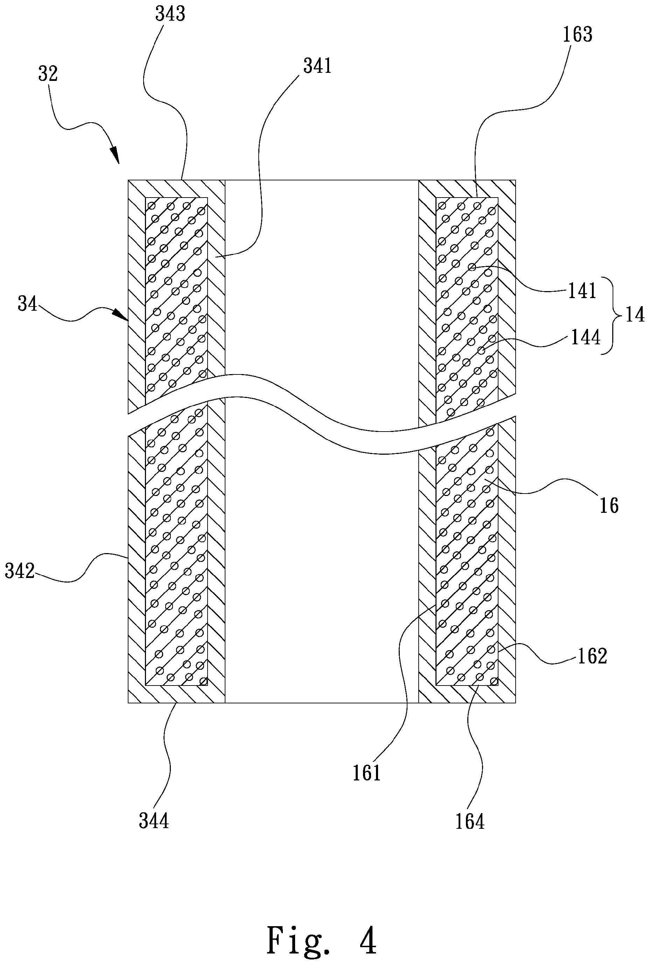

Referring to FIG. 4, the straw 32 includes a protective film 34 coated on the tube wall 16. The protective film 34 is made of the wax 22 when the wax 22 is dried. An internal portion 341 of the protective film 34 covers an internal face 161 of the tube wall 16. An external portion 342 of the protective film 34 covers the external face 162 of the tube wall 16. An upper annular portion 343 of the protective film 34 covers an end face 163 of the tube 16. A lower annular portion 344 of the protective film 34 covers the end face 164 of the tube wall 16. The protective film 34 keeps the tube wall 16 from liquid such as water or any proper drink. The weight of the light and edible straw 32 is substantially equal to the weight of the tube 16 plus the weight of the protective film 34. The wall of the tube 16 of the light and edible straw 32 includes empty microcapsules 141 and filled microcapsules 144.

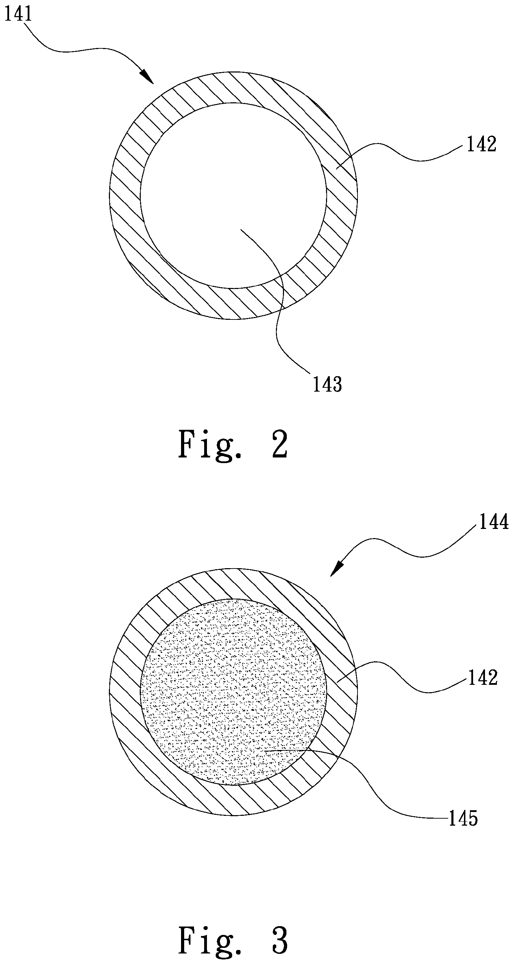

Referring to FIG. 2, each of the empty microcapsules 141 includes a wall 142 that encloses a space 143. The space 143 contains a type of gas such as air. The term, "empty", means "filled with nothing but a type of gas" hereinafter. The density of the light and edible straw 32 is smaller if it contains more empty microcapsules 141. The empty microcapsules 141 render the light and edible straw 32 crunchy.

Referring to FIG. 3, each of the filled microcapsules 144 includes filling 145 filled in the space 143 enclosed by the wall 142. The filling 145 is solid or liquid such as butter, chocolate, strawberry jam, milk, a dairy product (such as fruit-flavored milk powder, ginger-flavored milk powder, coca-flavored milk powder and foam milk powder), sweetener (such as aspartame), seasoning (such as lemon oil, peppermint oil, garlic oil and curry oil). Thus, the filled microcapsules 144 flavor the light and edible straw 32.

Referring to FIG. 4, the end face 164 extends perpendicular to an axis of the tube 16. That is, the tube 161 includes a flat lower end.

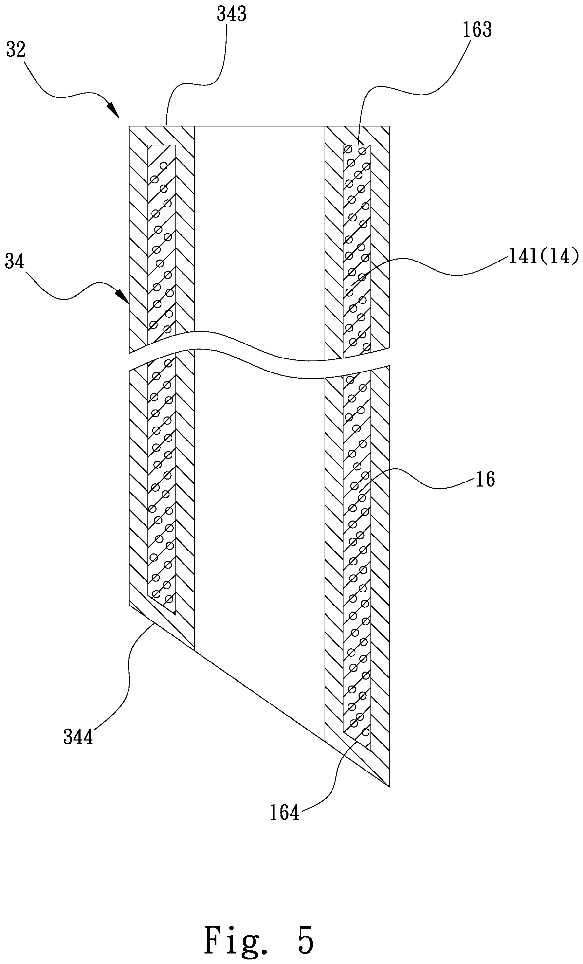

Referring to FIG. 5, the end face 164 does not extend perpendicular to the axis of the tube 16. That is, the tube 161 includes a pointed lower end.

The present invention has been described via the illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A method for making a light and edible straw comprising the steps of:
mixing starch (12) with microcapsules (14); shaping the mixture into a tube (16);
drying the tube (16); soaking the tube (16) in wax (22) so that the wax (22) covers the tube (16).

2. The method for making a light and edible straw according to claim 1, wherein each of the microcapsules (14) is made with a diameter of 30 to 1000µm.

3. The method for making a light and edible straw according to claim 2, wherein the microcapsules (14) comprise empty microcapsules (141) each of which comprises a wall (142), a space (143) enclosed in the wall (142), and a type of gas filled in the space (143).

4. The method for making a light and edible straw according to claim 3, wherein the type of gas is air.

5. The method for making a light and edible straw according to claim 2, wherein the microcapsules (14) comprise filled microcapsules (144) each of which comprises a wall (142), a space (143) enclosed in the wall (142), and filling (145) filled in the space (143).

6. The method for making a light and edible straw according to claim 5, wherein the filling (145) is selected from the group consisting of butter, chocolate, strawberry jam, milk, flavored dairy products, sweeteners and seasoning.

7. The method for making a light and edible straw according to claim 1, wherein the wax (22) is edible wax coated on the tube (16).

8. The method for making a light and edible straw according to claim 7, wherein the edible wax is a natural product derived from the group consisting of an animal and a plant.

9. The method for making a light and edible straw according to claim 7, wherein the edible wax is a synthetic product made by mixing natural wax with fatty acid.

10. A light and edible straw comprising: a tube wall (16) made of an edible material and comprising an internal face (161), an external face (162), an upper end face (163) and a lower end face (164); microcapsules (14) made of another edible material and inserted in the tube wall (16); and a protective film (34) made of an edible wax and comprising an internal portion (341) covering the internal face (161) of the tube wall (16), an external portion (342) covering the external face (162) of the tube wall (16), an upper annular portion (343) covering the upper end face (163) of the tube wall (16) and a lower annular portion (344) covering the lower end face (164) of the tube wall (16), thereby keeping the tube wall (16) from liquid.

11. The light and edible straw according to claim 10, wherein at least some of the microcapsules (141) are filled with a type of gas.

12. The light and edible straw according to claim 10, wherein at least some of the microcapsules (144) are filled with filling (145).

13. A light and edible straw according to claim 12, wherein the filling (145) is selected from the group consisting of butter, chocolate, strawberry jam, milk, flavored dairy products, sweeteners and seasoning.

## Patentansprüche

1. Verfahren zur Herstellung eines leichten und essbaren Strohhalms, das die folgenden Schritte umfasst:
Mischen von Stärke (12) mit Mikrokapseln (14); Formen der Mischung zu einem Rohr (16); Trocknen des Rohrs (16); Tränken des Rohrs (16) in Wachs (22), so dass das Wachs (22) das Rohr (16) bedeckt.

2. Verfahren zur Herstellung eines leichten und essbaren Strohhalms nach Anspruch 1, wobei jede der Mikrokapseln (14) mit einem Durchmesser von 30 bis 1000 µm hergestellt wird.

3. Verfahren zur Herstellung eines leichten und essbaren Strohhalms nach Anspruch 2, wobei die Mikrokapseln (14) leere Mikrokapseln (141) umfassen, von denen jede eine Wand (142), einen in der Wand (142) eingeschlossenen Raum (143) und eine in den Raum (143) eingefüllte Gasart aufweist.

4. Verfahren zur Herstellung eines leichten und essbaren Strohhalms nach Anspruch 3, wobei die Gasart Luft ist.

5. Verfahren zur Herstellung eines leichten und essbaren Strohhalms nach Anspruch 2, wobei die Mikrokapseln (14) gefüllte Mikrokapseln (144) umfassen, von denen jede eine Wand (142), einen in der Wand (142) eingeschlossenen Raum (143) und eine in den Raum (143) eingefüllte Füllung (145) umfasst.

6. Verfahren zur Herstellung eines leichten und essbaren Strohhalms nach Anspruch 5, wobei die Füllung (145) ausgewählt ist aus der Gruppe bestehend aus Butter, Schokolade, Erdbeermarmelade, Milch, aromatisierten Milchprodukten, Süßstoffen und Gewürzen.

7. Verfahren zur Herstellung eines leichten und essbaren Strohhalms nach Anspruch 1, wobei das Wachs (22) essbares Wachs ist, mit dem das Rohr (16) beschichtet ist.

8. Verfahren zur Herstellung eines leichten und essbaren Strohhalms nach Anspruch 7, wobei das essbare Wachs ein Naturprodukt ist, das aus der Gruppe der Tiere und Pflanzen stammt.

9. Verfahren zur Herstellung eines leichten und essbaren Strohhalms nach Anspruch 7, wobei das essbare Wachs ein synthetisches Produkt ist, das durch Mischen von natürlichem Wachs mit Fettsäure hergestellt wird.

10. Leichter und essbarer Strohhalm, umfassend: eine Rohrwand (16), die aus einem essbaren Material hergestellt ist und eine Innenfläche (161), eine Außenfläche (162), eine obere Endfläche (163) und eine untere Endfläche (164) aufweist, Mikrokapseln (14), die aus einem anderen essbaren Material hergestellt sind und in die Rohrwand (16) eingesetzt sind, und eine Schutzfolie (34), die aus einem essbaren Wachs hergestellt ist und einen inneren Abschnitt (341), der die Innenfläche (161) der Rohrwand (16) bedeckt, einen äußeren Abschnitt (342), der die Außenfläche (162) der Rohrwand (16) bedeckt, einen oberen ringförmigen Abschnitt (343), der die obere Endfläche (163) der Rohrwand (16) bedeckt, und einen unteren ringförmigen Abschnitt (344), der die untere Endfläche (164) der Rohrwand (16) bedeckt, umfasst, wodurch die Rohrwand (16) vor Flüssigkeit geschützt wird.

11. Leichter und essbarer Strohhalm nach Anspruch 10, wobei zumindest einige der Mikrokapseln (141) mit einer Art von Gas gefüllt sind.

12. Leichter und essbarer Strohhalm nach Anspruch 10, bei dem mindestens einige der Mikrokapseln (144) mit einer Füllung (145) gefüllt sind.

13. Leichter und essbarer Strohhalm nach Anspruch 12, wobei die Füllung (145) ausgewählt ist aus der Gruppe bestehend aus Butter, Schokolade, Erdbeermarmelade, Milch, aromatisierten Milchprodukten, Süßstoffen und Gewürzen.

## Revendications

1. Procédé de fabrication d'une paille légère et mangeable comprenant les étapes consistant à :
mélanger de la fécule (12) avec des microcapsules (14) ; mettre en forme le mélange dans un tube (16) ; faire sécher le tube (16) ; faire tremper le tube (16) dans de la cire (22) de sorte que la cire (22) couvre le tube (16).

2. Procédé de fabrication d'une paille légère et mangeable selon la revendication 1, dans lequel chacune des microcapsules (14) est fabriquée avec un diamètre de 30 à 1 000 µm.

3. Procédé de fabrication d'une paille légère et mangeable selon la revendication 2, dans lequel les microcapsules (14) comprennent des microcapsules vides (141), chacune comprenant une paroi (142), un espace (143) entouré par la paroi (142), et un type de gaz remplissant l'espace (143).

4. Procédé de fabrication d'une paille légère et mangeable selon la revendication 3, dans lequel le type de gaz est de l'air.

5. Procédé de fabrication d'une paille légère et mangeable selon la revendication 2, dans lequel les microcapsules (14) comprennent des microcapsules remplies (144), chacune comprenant une paroi (142), un espace (143) entouré par la paroi (142), et une garniture (145) remplissant l'espace (143).

6. Procédé de fabrication d'une paille légère et comestible selon la revendication 5, dans lequel la garniture (145) est sélectionnée dans le groupe consistant en beurre, chocolat, confiture de fraise, lait, produits laitiers aromatisés, édulcorants et assaisonnement.

7. Procédé de fabrication d'une paille légère et comestible selon la revendication 1, dans lequel la cire (22) est de la cire comestible dont le tube (16) est revêtu.

8. Procédé de fabrication d'une paille légère et comestible selon la revendication 7, dans lequel la cire comestible est un produit naturel dérivé du groupe consistant en un animal et une plante.

9. Procédé de fabrication d'une paille légère et comestible selon la revendication 7, dans lequel la cire comestible est un produit synthétique fabriqué en mélangeant de la cire naturelle avec un acide gras.

10. Paille légère et comestible comprenant : une paroi de tube (16) fabriquée dans une matière comestible et comprenant une face interne (161), une face externe (162), une face d'extrémité supérieure (163) et une face d'extrémité inférieure (164) ; des microcapsules (14) fabriquées dans une autre matière comestible et insérées dans la paroi de tube (16) ; et un film protecteur (34) fabriqué dans de la cire comestible et comprenant une partie interne (341) couvrant la face interne (161) de la paroi de tube (16), une partie externe (342) couvrant la face externe (162) de la paroi de tube (16), une partie annulaire supérieure (343) couvrant la face d'extrémité supérieure (163) de la paroi de tube (16) et une partie annulaire inférieure (344) couvrant la face d'extrémité inférieure (164) de la paroi de tube (16), préservant ainsi la paroi de tube (16) du liquide.

11. Paille légère et comestible selon la revendication 10, dans laquelle au moins certaines des microcapsules (141) sont remplies d'un type de gaz.

12. Paille légère et comestible selon la revendication 10, dans laquelle au moins certaines des microcapsules (144) sont remplies d'une garniture (145).

13. Paille légère et comestible selon la revendication 12, dans lequel la garniture (145) est sélectionnée dans le groupe consistant en beurre, chocolat, confiture de fraise, lait, produits laitiers aromatisés, édulcorants et assaisonnement.
